# EUROPEAN PATENT SPECIFICATION

(11) **EP 2 691 723 B1**
(45) Date of publication and mention of the grant of the patent: **19.10.2016**
(21) Application number: 12713390.8
(22) Date of filing: 16.03.2012
(51) Int. Cl.: F28D 20/00, F01N 3/20, F01N 3/28, F01N 5/02

(54) **CHEMICAL HEAT STORAGE REACTOR AND CHEMICAL HEAT STORAGE SYSTEM**
REAKTOR MIT CHEMISCHEM WÄRMESPEICHER SOWIE CHEMISCHES WÄRMESPEICHERSYSTEM
RÉACTEUR AVEC UN ACCUMULATEUR DE CHALEUR CHIMIQUE ET SYSTÈME DE STOCKAGE DE CHALEUR CHIMIQUE

(30) Priority: 30.03.2011 JP 2011076399
(43) Date of publication of application: 05.02.2014
(73) Proprietor: Kabushiki Kaisha Toyota Chuo Kenkyusho, Nagakute-shi, Aichi 480-1192 (JP)
(72) Inventor: HARA, Masashi, Nagakute-shi Aichi 480-1192 (JP); WAKASUGI, Tomohisa, Nagakute-shi Aichi 480-1192 (JP); SOBUKAWA, Hideo, Nagakute-shi Aichi 480-1192 (JP); MOCHIZUKI, Miyo, Nagakute-shi Aichi 480-1192 (JP); SHIMAZU, Takashi, Nagakute-shi Aichi 480-1192 (JP); FUKUSHIMA, Yoshiaki, Nagakute-shi Aichi 480-1192 (JP); KOMAKI, Katsuya, Kariya-city Aichi 448-8661 (JP); KUWAYAMA, Kazutoshi, Kariya-city Aichi 448-8661 (JP)
(74) Representative: Kramer Barske Schmidtchen Patentanwälte PartG mbB
(86) International application number: PCT/JP2012/057673
(87) International publication number: WO 2012/133258

(56) References cited:
- US-A- 4 367 079
- US-A- 5 298 231
- US-A- 5 653 106

## Description

### Technical Field

The present invention relates to a chemical heat storage reactor for storing heat using a chemical reaction and a chemical heat storage system of the same.

### Background Art

In Japanese Patent Application Laid-Open (JP-A) No. 7-180539, reference is made to a chemical heat generation device that supplies water to a reactor unit filled with an alkaline earth metal oxide (a heat storage material) and employs heat generated through a hydration reaction of the alkaline earth metal oxide to heat components such as a catalyst section, a water cooling section and an air intake section on engine start up. In the reactor unit of JP-A No. 7-180539, heat resistant porous members are sandwiched in the spaces between plural stacked layers of calcium oxide molded bodies, thereby ensuring a flow path for water.

In the chemical heat generation device of JP-A No. 7-180539, the hydration expansion pressure of the heat storage material is large, in the region of several MPa. It is accordingly necessary to lower the porosity of the porous material (to about 80% or lower) in order to prevent compression deformation or disintegration of the porous members sandwiched in the gaps. However, if the porosity of the porous members is reduced there is a large pressure loss, reducing the partial pressure of the water vapor and causing the reactivity of the heat storage material to fall. Furthermore, because the thermal capacity of the porous member is large, a problem arises in that the amount of usable heat decreases.

US 4,367,079 relates to a unit for use as a thermal accumulator element comprising a sorbent material, a substantially gas tight casing tightly surrounding said sorbent material, wherein said casing is formed of a flexible, relatively thin material having a low gas permeability and wherein said casing is provided with at least one port for admitting a gaseous substance into said interior to be adsorbed and desorbed by said sorbent material, and comprising means for maintaining the interior of the casing at a pressure substantially lower than the pressure at the exterior of said casing, said sorbent material and said casing thereby forming a rigid body, wherein the sorbent material comprises a plurality of elements of sorbent material hermetically enclosed in a common casing composed of several casing parts, the wall sections of adjacent casing parts being joined together in zones, in which passages are arranged which communicate between the casing parts for the flow of said gaseous substance to be sorbed and de-sorbed.

US 5,298,231 relates to a method of increasing reaction rates in a chemisorption reaction process in which a gaseous reactant is alternately adsorbed and desorbed on a complex compound formed by adsorbing said gaseous reactant on a solid reactant, said complex compound having a substantially increased volume as compared to unreacted solid reactant, said method comprising restricting the volumetric expansion and controlling the density of said complex compound during said reaction whereby the reaction rates at which said gaseous reactant are capable of being adsorbed and desorbed on said complex compound are increased as compared to reaction rates using a complex compound formed without restricting the volumetric expansion and controlling the density during said reaction, and carrying out said reaction process at said increased reaction rates using the complex compound formed by restricting the volumetric expansion and controlling the density in said reaction.

### SUMMARY OF INVENTION

### Technical Problem

The present invention is designed to address the above problem, and an object is to obtain a chemical heat storage reactor and a chemical heat storage system that are capable of ensuring a flow path to supply water vapor to the heat storage material, whilst suppressing a reduction in the reactivity of the heat storage material.

### Solution to Problem

A chemical heat storage reactor according to the present invention includes: at least one medium flow path through which a heat carrier flows; a vessel provided adjacent to the at least one medium flow path and into which water vapor flows; at least one heat storage material provided at the medium flow path side inside the vessel, generating heat by a hydration reaction with water vapor, and storing heat by a dehydration reaction when heated; at least one branch tube section provided inside the vessel on the side of one of the heat storage materials opposite to the medium flow path side, and permitting water vapor to pass through a flow path that is narrower than the average particle size of said one of the heat storage materials; and a main tube section provided inside the vessel on a side of one of the branch tube sections opposite to the heat storage material side, allowing water vapor to flow and suppressing or absorbing expansion of the heat storage material.

According to the above configuration, water vapor flows through the main tube section that acts as a water vapor flow path inside the vessel, and passes from the main tube section through the branch tube section to reach the heat storage material. The heat storage material then generates heat through a hydration reaction between the heat storage material and the water vapor, and the heat carrier inside the medium flow path is heated by the heat that has been generated.

As the main tube section suppresses or absorbs expansion of the heat storage material when the heat storage material has expanded as a result of the hydration reaction, the main tube section and the branch tube section do not burst, and a flow path for water vapor can be secured from the main tube section to the heat storage material. Since the water vapor is made to pass through flow paths in the branch tube section narrower than the average particle size of the heat storage material, heat storage material of larger than average particle size does not pass through the branch tube section. Hence even if part of the expanded heat storage material disintegrates into a powder state, the heat storage material in a powder state hence does not pass through the branch tube section and come out through to the main tube section side. Blockage of the main tube section by the heat storage material is accordingly suppressed, and a fall in the reactivity of the heat storage material can be suppressed since the water vapor is still supplied to the heat storage material.

In the chemical heat storage reactor according to the present invention, the main tube section includes plural wall sections provided along a direction of water vapor flow for suppressing or absorbing expansion of the at least one heat storage material; and a cross-sectional area of the plural wall sections in an orthogonal direction that is orthogonal to the water vapor flow direction is set in the range from 5% to 20% of a cross-sectional area in the orthogonal direction of the water vapor flow path inside the main tube section.

According to the above configuration, it is possible to suppress bursting of the main tube section since expansion of the heat storage material is suppressed or absorbed by the plural wall sections. The spaces between the plural wall sections act as flow paths for the water vapor, and by holding the proportion of the cross-sectional area of the wall sections to within 5% to 20% of the cross section surface area of the water vapor flow paths in the main tube section, a water vapor flow path is secured and the reactivity can also be suppressed from falling due to a drop in water vapor partial pressure.

In the chemical heat storage reactor according to the present invention, the main tube section is a corrugated plate formed with repeating recesses and projections in a cross-sectional profile along the orthogonal direction of the water vapor flow path inside the main tube section.

According to the above configuration, due to the corrugated plate having a profile of similar repeating recesses and projections, the size of each of the recess portions and the projection portions is uniform. The strength to counter expansion of the heat storage material is accordingly the same for each portion of the main tube section, resulting in the amount of water vapor supplied to the heat storage material also being uniform. A uniform state of hydration reaction is accordingly achieved in each portion of the heat storage materials, and uneven heating of the heating medium can be suppressed.

In the chemical heat storage reactor according to the present invention, the corrugated plate has a cross-sectional profile in the orthogonal direction that is a square waveform profile.

According to the above configuration, the corrugated plate with a square waveform profile has a larger contact surface area to the branch tube section and there is less stress concentration than for a curved wave form, and so the heat storage material is not so liable to disintegrate when the heat storage material expands due to the hydration reaction. It is hence possible to employ the heat storage material over a long period of time.

In the chemical heat storage reactor according to the present invention, the corrugated plate alternatively has a cross-sectional profile in the orthogonal direction that is a waveform profile with rounded apex portions that make contact with the at least one branch tube section.

According to the above configuration, the corrugated plate with a waveform profile with rounded apex portions has a greater contact surface area between the apex portions and the branch tube section than would be the case in a configuration having a V-shaped waveform in which the leading ends (apex portions) are placed in contact with the branch tube section. The heat storage material is accordingly less likely to disintegrate when it expands due to hydration reaction. The heat storage material can accordingly be used over a long period of time.

In a chemical heat storage reactor according to a preferred embodiment of the present invention, in a cross-section of the corrugated plate along the orthogonal direction, the length of a single pitch from a recess to a projection is set to be less than or equal to 7 times a cross-sectional thickness of the at least one heat storage material in the orthogonal direction.

According to the above configuration, by setting the length of a single pitch from a recess to a projection of a cross-section of the corrugated plate along the orthogonal direction at 7 times the cross-sectional thickness of the heat storage material in the orthogonal direction or less, the longest water vapor diffusion distance in the heat storage material becomes twice the thickness of the heat storage material or less. Namely, as the diffusion distance the water vapor needs to travel is shortened, reaction between the heat storage material and the water vapor can be reliably performed, and a reduction in reactivity between the heat storage material and the water vapor can be suppressed.

In a chemical heat storage reactor according to a preferred embodiment of the present invention, the at least one branch tube section is configured with a mesh form structural body.

According to the above configuration, by configuring the branch tube section with a mesh form structural body, any locations in the heat storage material expanded by hydration reaction that have disintegrated to a powder state can be prevented from falling through. The water vapor transmissivity can also be enhanced due to the thickness of the branch tube section being thin.

In a chemical heat storage reactor according to a preferred embodiment of the present invention, pairs of medium flow paths, heat storage materials and the branch tube sections are provided such that the first member of each pair is provided at an upper side of the main tube section, while the second member of each pair is provided at a lower side of the main tube section

A chemical heat storage system according to the present invention includes: the chemical heat storage reactor as described above; and an evaporation section provided in a state of airtight communication with the vessel, for evaporating water and supplying the evaporated water into the vessel.

According to the above configuration, since a fall in the reactivity of the heat storage material inside the chemical heat storage reactor can be suppressed, it is possible to suppress a reduction in the heating efficiency of the heating medium in the heat storage system. Advantageous Effects of Invention

Due to being configured as above, the present invention can ensure the flow path for supplying water vapor to the heat storage material and can also suppress a fall in the reactivity of the heat storage material.

### BRIEF DESCRIPTION OF DRAWINGS

Fig. 1 is a diagram showing an overall view of the outline configuration of a chemical heat storage system according to an exemplary embodiment of the present invention.
Fig. 2A is a configuration diagram of the interior of a reactor according to an exemplary embodiment of the present invention.
Fig. 2B is a cross-section taken on A-A' of a reactor according to an exemplary embodiment of the present invention.
Fig. 3 is a perspective view of a main tube section according to an exemplary embodiment of the present invention.
Fig. 4 is a schematic diagram showing the pitch of a main tube section, the thickness of heat storage material, and the maximum vapor diffusion distance according to an exemplary embodiment of the present invention.
Fig. 5A is an explanatory diagram showing heating state of a heating medium by a hydration reaction in a chemical heat storage system according to an exemplary embodiment of the present invention.
Fig. 5B is an explanatory diagram showing a condensing state when a dehydration reaction being performed by heating with the heat medium in a chemical heat storage system according to an exemplary embodiment of the present invention.
Fig. 6 is a schematic diagram showing operation of a main tube section and a branch tube section according to an exemplary embodiment of the present invention.
Fig. 7 is a graph showing relationships between temperature and equilibrium pressure for a line of reaction equilibrium of a heating medium and a water gas-liquid line of equilibrium in a chemical heat storage system according to an exemplary embodiment of the present invention.
Fig. 8A is a cross-section showing a second implementation example of a reactor according to an exemplary embodiment of the present invention.
Fig. 8B is a cross-section showing a comparative example of a reactor.
Fig. 9 is a cross-section showing a comparative example of a reactor.
Fig. 10A is a perspective view showing the comparative example of a main tube section (a portion of the main tube section of Fig. 9).
Fig. 10B is a perspective view showing a comparative example of a main tube section.
Fig. 11 is a configuration diagram showing a third implementation example of a reactor according to an exemplary embodiment of the present invention.

### DESCRIPTION OF EMBODIMENTS

Explanation follows regarding an example of a chemical heat storage reactor and chemical heat storage system according to an exemplary embodiment of the present invention.

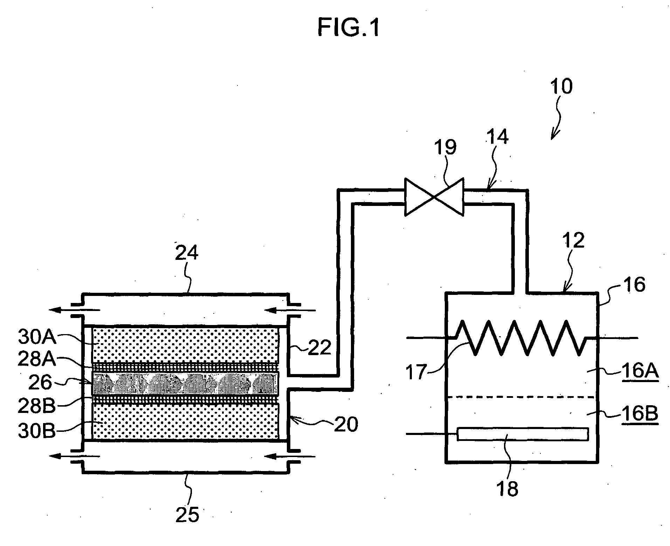

Fig. 1 illustrates a schematic configuration of a chemical heat storage system 10 as an exemplary embodiment. The chemical heat storage system 10 is configured including: an evaporator-condenser unit 12 serving as an example of an evaporation section where water (H₂O) evaporation and condensation is performed; a reactor 20 serving as an example of a chemical heat storage reactor in which a hydration reaction or a dehydration reaction is performed with heat storage materials 30A, 30B, described later; and a water vapor flow path 14 connected to the evaporator-condenser unit 12 and the reactor 20 and placing the insides of the evaporator-condenser unit 12 and the reactor 20 in communication with each other. Note that in the present exemplary embodiment an example is given in which the chemical heat storage system 10 is applied to a vehicle (not shown in the drawings).

The evaporator-condenser unit 12 combines each of the functions of an evaporation section for evaporating stored water for supply to the reactor 20 (for water vapor generation), a condensing section for condensing water vapor introduced from the reactor 20, and a storage section for storing water that has been condensed from water vapor. The evaporator-condenser unit 12 includes a container 16 that stores water inside. A cooling medium flow path 17 employed for condensing water vapor and a heater 18 employed for evaporation are provided inside the container 16. At least a portion of the cooling medium flow path 17 is contained in a vapor phase section 16A inside the container 16 so as to perform heat exchange. At least a portion of the heater 18 is contained in a liquid phase section (storage section) 16B inside the container 16 so as to perform heating by passing electricity through.

An open-shut valve 19 is provided on the water vapor flow path 14 for switching between communication or non-communication between the evaporator-condenser unit 12 (the container 16) and the reactor 20 (a reaction vessel 22, described later). Locations connecting the container 16, the reaction vessel 22, the water vapor flow path 14 and the open-shut valve 19 together are made air tight and the internal space within these components is evacuated to a vacuum in advance.

Explanation follows regarding the reactor 20.

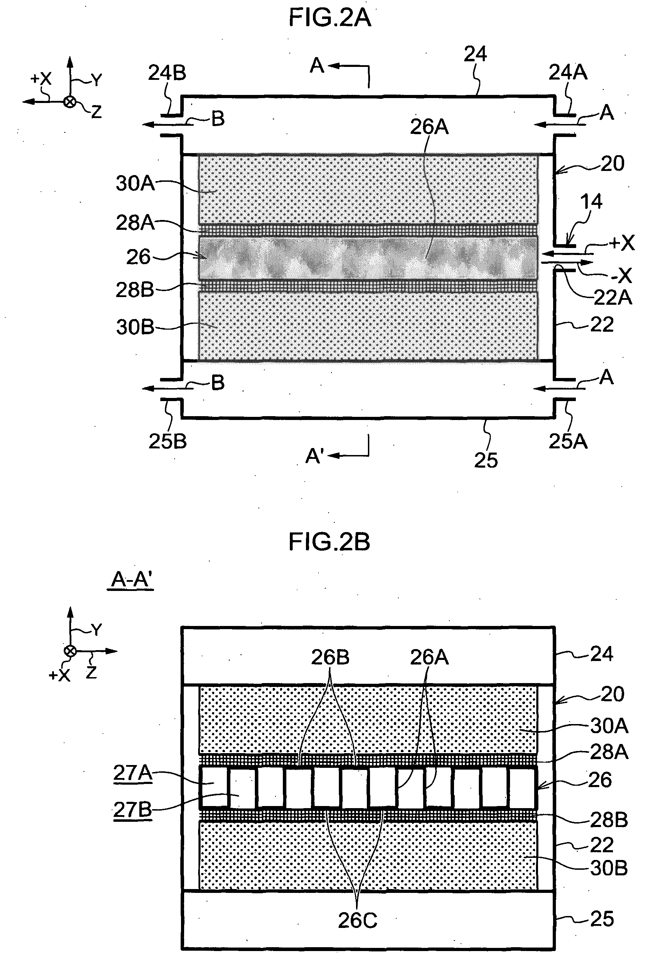

As shown in Fig. 2A and Fig. 2B, the inside of the reactor 20 is configured including: heating medium flow paths 24, 25 serving as examples of medium flow path through which a heat carrier (referred to below as a heating medium) flows; the reaction vessel 22 provided adjacent to the heating medium flow paths 24, 25 and serving as an example of a vessel through which water vapor from the water vapor flow path 14 flows (configuring a water vapor flow path); heat storage materials 30A, 30B provided inside the reaction vessel 22 at the heating medium flow paths 24, 25 sides; branch tube sections 28A, 28B provided inside the reaction vessel 22 at the opposite sides of the heat storage materials 30A, 30B to the heating medium flow paths 24, 25; and a main tube section 26 provided inside the reaction vessel 22 at the opposite sides of the branch tube sections 28A, 28B to the heat storage materials 30A, 30B sides.

In the following explanation, in the reaction vessel 22 the array direction of the main tube section 26, the branch tube sections 28A, 28B and the heat storage materials 30A, 30B is referred to as the arrow Y direction, a direction orthogonal to the arrow Y direction along which water vapor flows is referred to as the arrow X direction, and the direction orthogonal to both the arrow X direction and the arrow Y direction is referred to as the arrow Z direction. The flow directions of water vapor within the reaction vessel 22 are respectively referred to as the + arrow X direction for the inflow direction and the - arrow X direction for the outflow direction when a distinction is made between the inflow and outflow directions.

The up-down direction in Fig. 2A and Fig. 2B is aligned with the arrow Y direction. The reaction vessel 22 is configured with the heat storage material 30B, the branch tube section 28B, the main tube section 26, the branch tube section 28A and the heat storage material 30A stacked inside in this sequence from the bottom side towards the top side. The heating medium flow path 25 is disposed adjacent at the bottom side of the reaction vessel 22, and the heating medium flow path 24 is disposed adjacent at the top side of the reaction vessel 22. In the present exemplary embodiment the reactor 20 is disposed as an example such that the X-Y plane is a vertical plane, however there is no limitation thereto and the reactor 20 may be disposed such that the X-Y plane is a horizontal plane.

The heating medium flow paths 24, 25 are configured, for example, from stainless steel in an angular tube shape. The heating medium flow paths 24, 25 have flattened rectangular shaped flow inlets 24A, 25A for the heating medium to flow into and flattened rectangular shaped outlets 24B, 25B for the heating medium to flow out from. Inflow of the heating medium through the flow inlets 24A, 25A into the heating medium flow paths 24, 25 is indicated by arrows A, and outflow of the heating medium from inside the heating medium flow paths 24, 25 through the flow outlets 24B, 25B is indicated by arrows B. Arrows A and B are aligned along the arrow X direction.

The heating medium is a medium for transporting heat from the heat storage materials 30A, 30B by being heated. In the present exemplary embodiment engine oil of a vehicle (not shown in the drawings) is employed as an example of the heating medium. Other examples of mediums which may be employed as the heating medium include exhaust gas, air heated by an electrical heater (not shown in the drawings), or cooling water. A catalyst may also be employed instead of a liquid, such that the catalyst is heated.

An opening 22A is formed to the cuboid shaped reaction vessel 22 at an arrow Y direction central portion of one side wall in the arrow X direction. One end of the water vapor flow path 14 is connected to the opening 22A. The main tube section 26 is disposed in the reaction vessel 22 at a position facing towards the opening 22A.

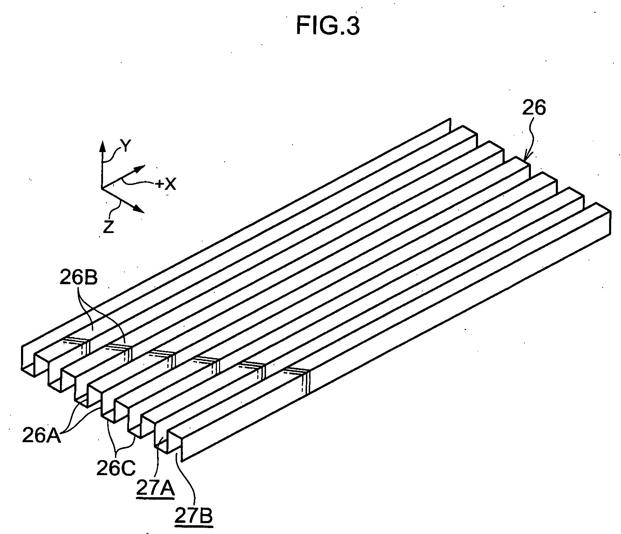

As shown in Fig. 2B and Fig. 3, the main tube section 26 is, for example, configured by press forming stainless steel so as to form corrugated plates (wall portions) forming a cross-sectional profile (Y-Z plane) of a square wave shape along the arrow Z direction with repeating indentations and protrusions. More specifically, plural side walls 26A (serving as examples of wall portions and corrugated plates) are disposed upright at intervals along the arrow Z direction, with upper walls 26B (serving as examples of corrugated plates) connecting the upper end portions of every other side wall 26A along the arrow Z direction, and lower walls 26C (serving as examples of corrugated plates) connecting the lower end portions of every other side wall 26A along the arrow Z direction at locations shifted from the position of the upper walls 26B.

The side walls 26A are formed with rectangular shapes, with their length direction aligned with the arrow X direction and their short direction along the arrow Y direction. The upper walls 26B and the lower walls 26C are also formed with rectangular shapes, but with their length direction aligned with the arrow X direction and their short direction along the arrow Z direction. The main tube section 26 has upper side flow paths 27A of rectangular U-shape surrounded by two of the side walls 26A and one of the lower walls 26C, and lower side flow paths 27B of rectangular U-shape surrounded by two of the side walls 26A and one of the upper walls 26B. The main tube section 26 is configured such that water vapor flows in the plural upper side flow paths 27A and the plural lower side flow paths 27B.

The main tube section 26 is, for example, formed such that the total cross-sectional area in the Y-Z plane of the plural side walls 26A, upper walls 26B and lower walls 26C (referred to as S1) is 10% of the total cross-sectional area in the Y-Z plane of the plural upper side flow paths 27A and lower side flow paths 27B (referred to as S2). Namely (S1/S2) × 100 = 10%. Explanation regarding a preferable setting range for the total cross-sectional area S1 and the total cross-sectional area S2 is given later.

As shown in Fig. 2A and Fig. 2B, the branch tube sections 28A, 28B are configured by stainless steel mesh, serving as examples of mesh shaped structural members, and having a finer filtration fineness than the average particle size of the heat storage materials 30A, 30B. In the branch tube sections 28A, 28B water vapor therefore passes through flow paths narrower than the average particle size of the heat storage materials 30A, 30B, but the heat storage materials 30A, 30B with particle sizes larger than the average particle size are not able to pass through the branch tube sections 28A, 28B. The filtration fineness refers to a particle size of particles for which filtration efficiency is 50% to 98%, with filtration efficiency being the removal efficiency rate for particles of a given particle size.

The branch tube section 28A is disposed in contact with the plural upper walls 26B of the main tube section 26, and the branch tube section 28B is disposed in contact with the plural lower walls 26C of the main tube section 26. The branch tube sections 28A, 28B have the role of dissipating force from the main tube section 26 such that it is not concentrated on only a portion, and convert the force into surface pressure.

Molded bodies of calcium oxide (CaO), an oxide of an alkali earth metal, are employed as the heat storage materials 30A, 30B, for example. The molded bodies are, for example, molded by mixing and kneading calcium oxide powder with a binder (for example a clay material) and calcinating, so as to form substantially rectangular block shapes. The heat storage materials 30A, 30B are disposed (inserted) surrounded at the periphery in a close contact state by the internal wall faces of the reaction vessel 22.

The heat storage materials 30A, 30B are a material that dissipates heat (generates heat) on hydration, and stores heat (absorbs heat) on dehydration, so as to achieve a configuration inside the reactor 20 in which reversible heat dissipation and heat storage is repeatedly obtained.

CaO + H₂O ↔ Ca (OH)₂

Showing the endothermic and exothermic amounts Q on the above formula gives:

CaO + H₂O → Ca (OH)₂ + Q

Ca (OH)₂ + Q → CaO + H₂O

The heat storage capacity of 1kg of the heat storage materials 30A, 30B is, for example, 1.86 (MJ/kg).

In the present exemplary embodiment the particle size of the heat storage materials 30A, 30B is taken as the average particle size when a powder is employed for the heat storage materials 30A, 30B, is taken as the average particle size of the powder prior to forming into granules when the heat storage materials 30A, 30B are in a granule form, and is taken as the average particle size of the structuring particles prior to molding when the heat storage materials 30A, 30B are in the form of molded bodies. This is because it is assumed that if granules or molded bodies were to disintegrate they would return to the state of the previous process.

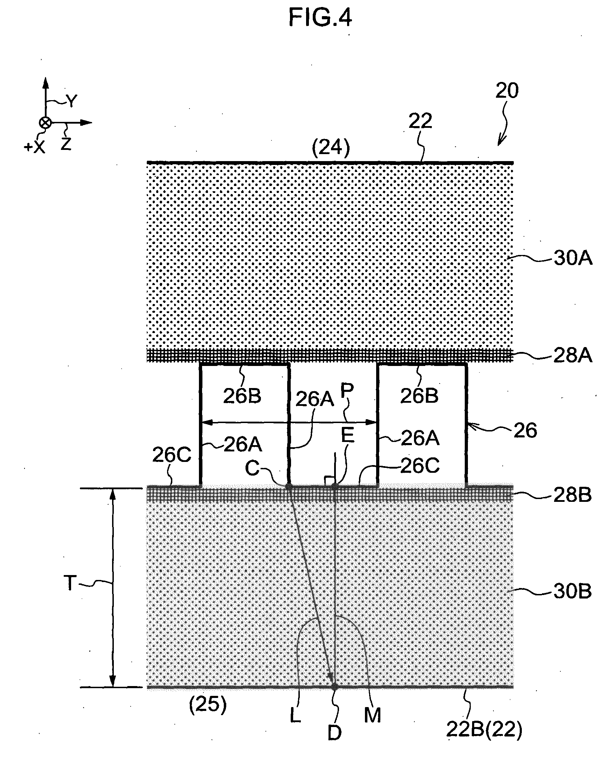

However, as shown in Fig. 4, in the main tube section 26, in the Y-Z plane the length of pitch P from a recess (lower wall 26C) to a projection (upper wall 26B) (the width along the arrow Z direction between 3 of the side walls 26A) is set to be 7 times or less the thickness T of the heat storage materials 30A, 30B in the arrow Y direction in the Y-Z plane. Namely one pitch length P is set such that P ≤ 7T. This is because as the pitch P becomes larger, the water vapor diffusion distance L becomes longer, with a resulting fall in reactivity between the water vapor and the heat storage materials 30A, 30B.

One pitch length P is derived as follows. In Fig. 4, since the thickness of the branch tube section 28B is relatively thin compared to the thickness T of the heat storage material 30B, the separation distance from the internal wall 22B of the reaction vessel 22 to the lower walls 26C of the main tube section 26 is taken as the thickness T of the heat storage material 30B. C indicates the end point of one of the lower walls 26C in one arrow Z direction, D indicates the intersection point of a line M (actually a plane) orthogonally bisecting the lower wall 26C with the internal wall 22B, and E indicates the central point along the arrow Z direction of the lower walls 26C. The maximum separation distance (maximum water vapor diffusion distance) of the water vapor diffusing from the main tube section 26 towards the heat storage material 30B is the line segment CD = L.

Since the width of the upper walls 26B and the width of the lower walls 26C along the arrow Z direction are set the same as each other, the equation L² = T² + (P/4)² applies to the right angled triangle CED. The maximum water vapor diffusion distance L may be set as twice the thickness T of the heat storage material 30B or shorter in consideration of the reactivity of the water vapor and the heat storage material 30B. Namely, preferably L ≤ 2T and L² ≤ 4T². Employing these two formulae to define the relationship between P and T obtains P² ≤ 48T², or P ≤ 7T.

Explanation follows regarding operation of the present exemplary embodiment.

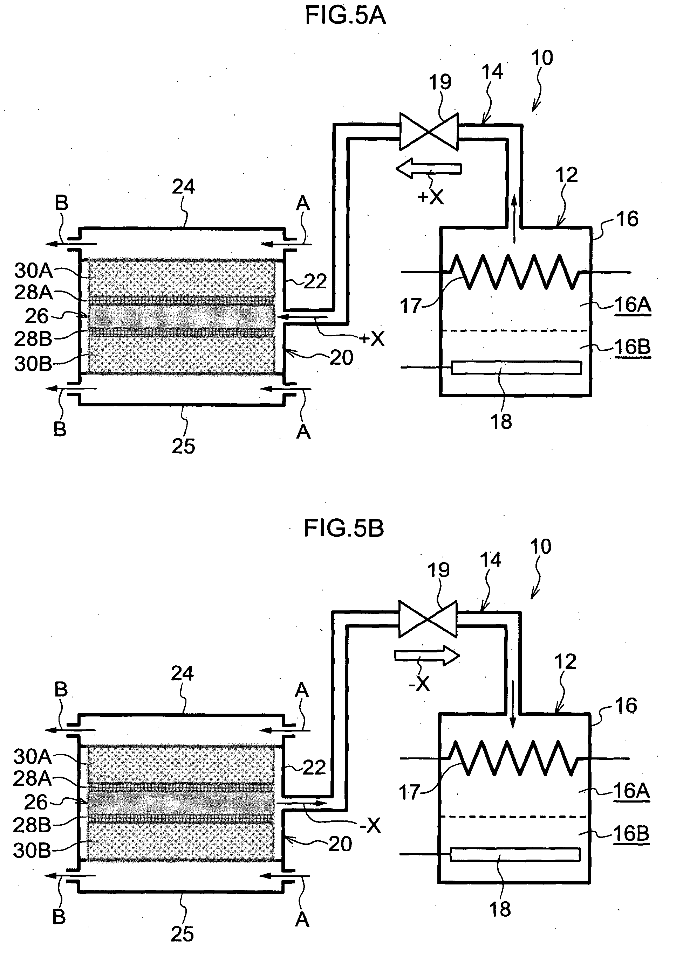

As shown in Fig. 5A, in order to dissipate heat stored in the reactor 20 in the chemical heat storage system 10, water in the liquid phase section 16B is evaporated with the heater 18 of the evaporator-condenser unit 12 while the open-shut valve 19 is in an open state. The water vapor generated moves in the + arrow X direction in the water vapor flow path 14 and is fed into the reactor 20.

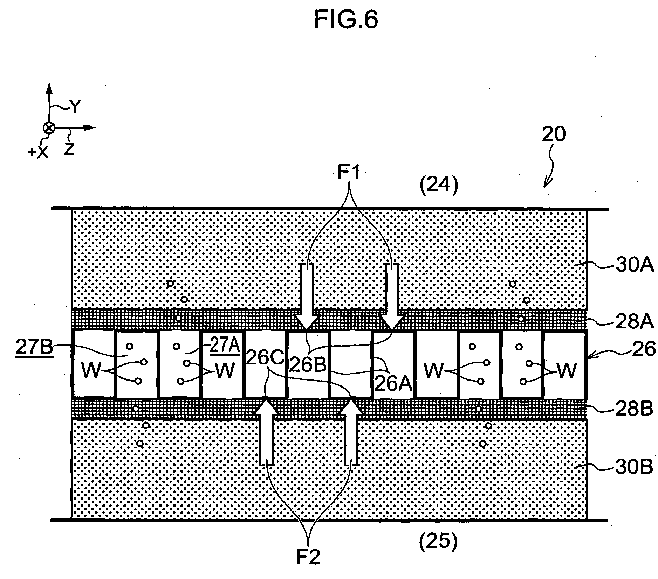

As shown in Fig. 6, the water vapor W that has been fed into the reactor 20 flows through inside the plural upper side flow paths 27A and lower side flow paths 27B of the main tube section 26. The water vapor W in the upper side flow paths 27A then passes through the branch tube section 28A and makes contact with the heat storage material 30A, such that heat is dissipated as a hydration reaction occurs with the heat storage material 30A. This heat is transported by the heating medium flowing inside the heating medium flow path 24 being subjected to heating. Similarly, due to the water vapor W inside the lower side flow paths 27B passing through the branch tube section 28B and making contact with the heat storage material 30B, the heat storage material 30B dissipates heat as a hydration reaction occurs. This heat is transported by the heating medium flowing inside the heating medium flow path 25 being subjected to heating.

However, as shown in Fig. 5B, in the chemical heat storage system 10 in order to store heat in the heat storage materials 30A, 30B of the reactor 20, the heating medium that has been heated by a heat source (not shown in the drawings) is caused to flow inside the heating medium flow paths 24, 25 with the open-shut valve 19 in the open state. A dehydration reaction occurs in the heat storage materials 30A, 30B due to heating from the heating medium, thereby storing this heat in the heat storage materials 30A, 30B. The water vapor dehydrated from the heat storage materials 30A, 30B flows from the branch tube sections 28A, 28B through the main tube section 26, and then flows in the water vapor flow path 14 to be introduced into the evaporator-condenser unit 12. In the vapor phase section 16A of the evaporator-condenser unit 12 the water vapor is cooled by cooling medium passing through the cooling medium flow path 17, and condensed water is stored in the liquid phase section 16B of the container 16.

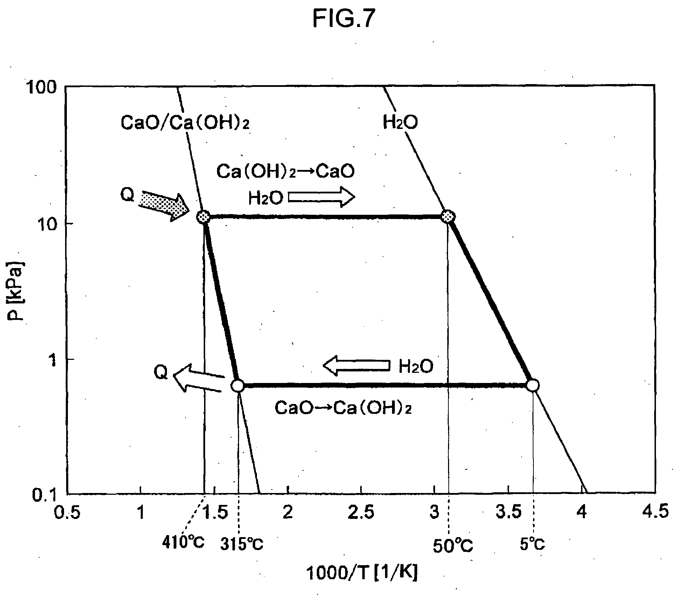

Further supplementary explanation follows regarding heat storage and heat dissipation of the heat storage materials 30A, 30B explained above, with reference to a cycle (an example) in the chemical heat storage system 10 illustrated in Fig. 7. Fig. 7 is a PT graph illustrating a cycle of the chemical heat storage system 10 from the perspective of equilibrium pressure. In this graph the upper equal pressure line illustrates a dehydration (endothermic) reaction, and the lower equal pressure line illustrates a hydration (exothermic) reaction.

In this cycle, for example, when heat storage is performed with the temperature of the heat storage material at 410 °C, water vapor is at an equilibrium temperature at 50 °C. Therefore in the chemical heat storage system 10 the water vapor is condensed into water by cooling the water vapor to 50 °C or less by heat exchange with the cooling medium of the cooling medium flow path 17 in the evaporator-condenser unit 12 (see Fig. 1),

However, when heating is performed with the heater 18 (see Fig. 1) water vapor is generated at a vapor pressure corresponding to the temperature of the heater 18. For example, it can be seen from the cycle illustrated in Fig. 7 that when water vapor is generated at 5 °C the heat storage material dissipates heat at 315 °C. In such a chemical heat storage system 10 from which air inside has been expelled to a vacuum, a low temperature heat source in the vicinity of 5 °C is leveraged up and a high temperature of the order of 315 °C can be obtained.

In the reactor 20 of the present exemplary embodiment, as shown in Fig. 6, when the heat storage materials 30A, 30B expand due to the hydration reaction, a pressing force F1 acts downwards along the arrow Y direction on the upper walls 26B of the main tube section 26, and a pressing force F2 acts upwards in the arrow Y direction on the lower walls 26C. However the main tube section 26 resists the pressing forces F1, F2 with the plural side walls 26A. Since expansion of the heat storage materials 30A, 30B is accordingly suppressed or absorbed, the main tube section 26 itself and the branch tube sections 28A, 28B do not burst, and a flow path for water vapor can be secured from the main tube section 26 towards the heat storage materials 30A, 30B.

In the reactor 20, since the water vapor passes through the branch tube sections 28A, 28B but the heat storage materials 30A, 30B with particle sizes larger than the average particle size do not pass through, even if a portion of the expanded heat storage materials 30A, 30B disintegrates and a powder state results, the heat storage materials 30A, 30B in a powder state do not pass through the branch tube sections 28A, 28B out into the main tube section 26 side. Blockage of the main tube section 26 by the heat storage materials 30A, 30B is accordingly suppressed, and a fall in the reactivity of the heat storage materials 30A, 30B can be suppressed since the water vapor is still supplied to the heat storage materials 30A, 30B.

In the reactor 20, the main tube section 26 also has a Y-Z plane cross-sectional profile that is a rectangular corrugated shape of repeating recesses and projections, and there is a uniform size to each of the recess portions (the upper side flow paths 27A) and the projection portions (the lower side flow paths 27B). The strength to counter expansion of the heat storage materials 30A, 30B is accordingly the same for each portion of the main tube section 26, and so the amount of water vapor supplied to the heat storage materials 30A, 30B is uniform. A uniform state of hydration reaction is accordingly achieved in each portion of the heat storage materials 30A, 30B, and uneven heating of the heating medium in the heating medium flow paths 24, 25 can be suppressed.

In addition, the main tube section 26 in the reactor 20 is a corrugated plate with a square wave profile, and since the contact surface area to the branch tube sections 28A, 28B is larger and stress concentration smaller than for a curved wave form, the heat storage materials 30A, 30B are not so liable to disintegrate when the heat storage materials 30A, 30B expand due to the hydration reaction. It is hence possible to employ the heat storage materials 30A, 30B over a long period of time.

In Fig. 4, the reactor 20 is set with a single pitch length P in the Y-Z plane from one recess portion to a projection portion (a length of a single profile consisting of one recess portion and one projection portion) that is 7 times the cross-section thickness T of the heat storage materials 30A, 30B or less. The maximum length of the water vapor diffusion distance L in the heat storage materials 30A, 30B is hence twice the thickness T of the heat storage materials 30A, 30B or less. Namely, since the diffusion distance water vapor needs to pass through is short, water vapor reaction with the heat storage materials 30A, 30B can be assured, and a reduction in the reactivity can be suppressed.

In the reactor 20 the branch tube sections 28A, 28B are also of mesh form (net form) structural bodies. Accordingly any locations in the heat storage materials 30A, 30B that have expanded by hydration reaction while water vapor is passed through and disintegrated to a powder state can be prevented from falling through. Since the thickness of the branch tube sections 28A, 28B is also thinner due to a mesh form being employed the water vapor permeability (transmissivity) can also be enhanced.

The reactor 20 also has the branch tube sections 28A, 28B and the heat storage materials 30A, 30B provided on both the top and bottom sides, with the main tube section 26 interposed therebetween. Consequently, there is twice the amount of reaction-capable heat storage material present compared to configurations where the heat storage material is only provided at one side. The reactivity of the water vapor and heat storage material (CaO) is accordingly further enhanced.

Accordingly in the chemical heat storage system 10 of the present exemplary embodiment, since a fall in the reactivity with water vapor of the heat storage materials 30A, 30B in the reactor 20 is suppressed the heating efficiency of the heating medium in the chemical heat storage system 10 can also be suppressed from falling.

Table 1 illustrates measurement results of reaction efficiency between the heat storage materials 30A, 30B and water vapor when various parameters are changed (the cross-sectional profile and the cross-section ratio of the main tube section 26, and the P/T (single pitch P/ thickness T of the heat storage materials 30A, 30B), the type and filtration accuracy of the branch tube sections 28A, 28B). The Test Examples 1 to 7 are configurations employing the reactor 20 of the present exemplary embodiment, the Comparative Examples 1 to 7 are configurations in which the reactor 20 of the present exemplary embodiment is not employed.

In Table 1 the strength is designated good when significant compression deformation or disintegration does not result from the hydration expansion pressure of the heat storage materials 30A, 30B and designated no good in other cases. The cross-section ratio indicates the corrugated plate cross-sectional area as a proportion of the water vapor flow path cross-sectional area in a direction (Y-Z plane) perpendicular to the water vapor flow (as previously denoted S1 /S2 × 100). The filtration fineness is designated good when it is smaller than the particle size of the heat storage materials 30A, 30B, and designated as no good when it is larger. The reaction efficiency is the exothermic amount Q (see Fig. 7) at the 1^{st} hydration reaction or the 1000^{th} hydration reaction expressed as a proportion of the theoretical exothermic amount.

**Table 1**

| | Main tube section | | | | Branch tube section | | Reaction efficiency | |
|---|---|---|---|---|---|---|---|---|
| | Type (shape) | Strength | Cross-section ratio | P/T | Type | Filtration accuracy | 1^{st} reaction | 1000^{th} reaction |
| Test Example 1 | Corrugated plate (rectangular) | Good | 5% | 1 | Mesh | Good | 95% | 95% |
| Test Example 2 | Corrugated plate (rectangular) | Good | 10% | 1 | Mesh | Good | 90% | 90% |
| Test Example 3 | Cross shaped cross section | Good | 15% | 1 | Mesh | Good | 85v | 85% |
| Test Example 4 | Corrugated plate (rectangular) | Good | 20% | 1 | Mesh | Good | 80% | 80% |
| Test Example 5 | Corrugated plate (rectangular) | Good | 10% | 3 | Mesh | Good | 85% | 85% |
| Test Example 6 | Corrugated plate (rectangular) | Good | 10% | 5 | Mesh | Good | 80% | 80% |
| Test Example 7 | Corrugated plate (rectangular) | Good | 10% | 7 | Mesh | Good | 70% | 70% |
| Comparative Example 1 | Corrugated plate (rectangular) | No Good | 10% | 1 | Mesh | Good | 90% | 0% |
| Comparative Example 2 | Corrugated plate (rectangular) | Good | 10% | 1 | Mesh | No Good | 90% | 0% |
| Comparative Example 3 | Corrugated plate (rectangular) | No Good | 5% | 1 | Mesh | Good | 95% | 0% |
| Comparative Example 4 | Corrugated plate (rectangular) | Good | 25% | 1 | Mesh | Good | 70% | 70% |
| Comparative Example 5 | Corrugated plate (rectangular) | Good | 10% | 1 | Mesh | Good | 90% | 50% |
| Comparative Example 6 | Corrugated plate (rectangular) | Good | 10% | 9 | Mesh | Good | 50% | 50% |
| Comparative Example 7 | Corrugated plate (rectangular) | Good | 10% | 1 | Metal fiber sintered body | Good | 70% | 70 |

As shown in Fig. 1, under the condition for the main tube section 26 that the cross-sectional profile is a rectangular shape or cross shape (described later) with a cross-section ratio of 5% to 20% and P/T of 7 or less, and the condition that the branch tube sections 28A, 28B have a mesh form that satisfies the filtration accuracy condition, a good reaction efficiency (from 70% to 90%) is obtained even on the 1000^{th} reaction, comparable to the reaction efficiency the first reaction.

By holding the cross-section ratio in the main tube section 26 of the present Test example within the range of 5% to 20%, for example 10%, a water vapor flow path is secured, and the reactivity can also be suppressed from falling due to a drop in water vapor partial pressure.

Explanation follows regarding other embodiments and comparative examples of the reaction vessel of the present Test example. The reactor 20 that has already been referred to above is called Test Example 1.

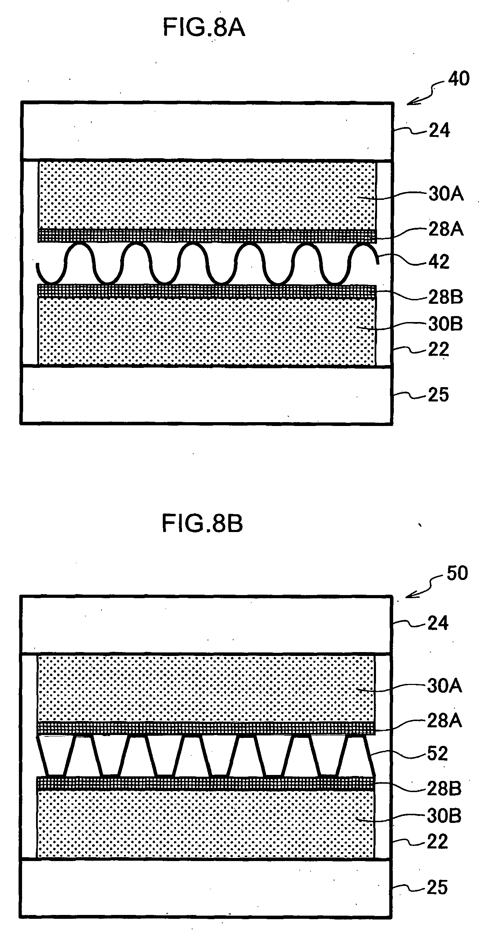

Fig. 8A illustrates a section on the Y-Z plane of a reaction vessel 40 (an example of chemical heat storage reactor) serving as a Test Example 2. The reaction vessel 40 is provided with a main tube section 42 in place of the main tube section 26 (see Fig. 2B) of the reactor 20 of Test Example 1, but other parts of the configuration are similar to those of the reactor 20. The main tube section 42 has a waveform with continuously curved surfaces. The apex portions on the top side of the main tube section 42 make contact with a branch tube section 28A, and the apex portions on the bottom side make contact with a branch tube section 28B. Each of the apex portions is rounded.

Due to the main tube section 42 in the reaction vessel 40 being formed in a waveform there is greater contact surface area with the branch tube sections 28A, 28B than would be the case in a configuration having a V-shaped Y-Z plane cross-section in which the top ends and bottom ends make contact with the branch tube sections 28A, 28B. This results in load being less liable to be locally concentrated in the heat storage materials 30A, 30B when the heat storage materials 30A, 30B expand due to hydration reaction and there being less likelihood of disintegration, thereby enabling the heat storage materials 30A, 30B to be used over a long period of time.

Fig. 8B illustrates a section on the Y-Z plane of a reaction vessel 50 (a comparative example of chemical heat storage reactor) serving as a Test Example 3. The reaction vessel 50 is provided with a main tube section 52 in place of the main tube section 26 (see Fig. 2B) of the reactor 20 of Test Example 1, but other parts of the configuration are similar to those of the reactor 20. The main tube section 52 has a Y-Z plane trapezoidal shaped waveform, and the top faces of the main tube section 52 make contact with a branch tube section 28A, and the bottom faces make contact with a branch tube section 28B.

Due to the main tube section 52 in the reaction vessel 50 having a trapezoidal shape, there is greater contact surface area with the branch tube sections 28A, 28B than would be the case in a configuration having a V-shaped Y-Z plane cross-section in which the top ends and bottom ends make contact with the branch tube sections 28A, 28B. This results in load being less liable to be locally concentrated in the heat storage materials 30A, 30B when the heat storage materials 30A, 30B expand due to hydration reaction and there being less likelihood of disintegration, thereby enabling the heat storage materials 30A, 30B to be used over a long period of time.

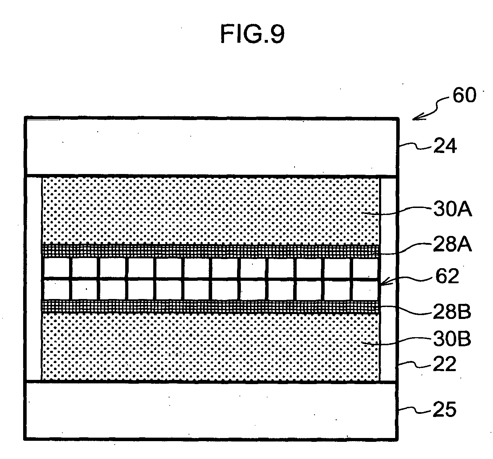

Fig. 9 illustrates a section on the Y-Z plane of a reaction vessel 60 (a comparative example of a chemical heat storage reactor) serving as a Test Example 4. The reaction vessel 60 is provided with a main tube section 62 in place of the main tube section 26 (see Fig. 2B) of the reactor 20 of Test Example 1, but other parts of the configuration are similar to those of the reactor 20. The main tube section 62 has a Y-Z plane profile of connected cross shapes, and the top edge of the main tube section 62 makes contact with a branch tube section 28A, and the bottom edge makes contact with a branch tube section 28B.

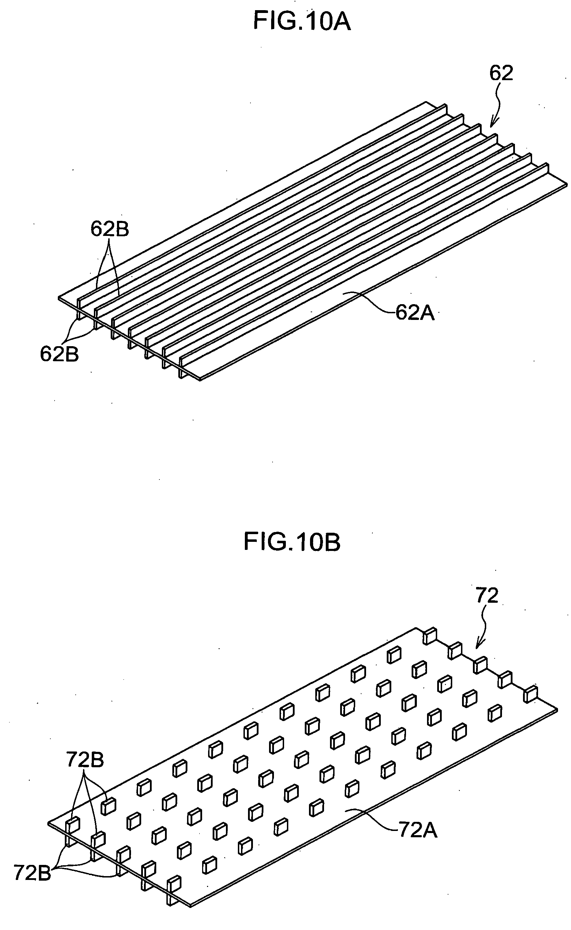

More specifically, as shown in Fig. 10A, the main tube section 62 is configured including a horizontal plate section 62A and plural side walls 62B extending out towards the top side and the bottom side from the top face and the bottom face of the horizontal plate section 62A. The locations of the side walls 62B on the top and bottom of the horizontal plate section 62A are aligned with each other so as to form cross-shapes in cross-section. Water vapor flow paths are hence formed between each of the side walls 62B.

In the reaction vessel 60 since all of the water vapor flow paths are between the top side and the bottom side of the horizontal plate section 62A and the plural side walls 62B, water vapor can be uniformly supplied to the whole of the heat storage materials 30A, 30B shown in Fig. 9.

In a modified example of the main tube section 62, a main tube section 72 as shown in Fig. 10B may be employed. The main tube section 72 is provided with a horizontal plate section 72A formed in the X-Z plane (arrows X and Z are omitted in the illustration), with plural small projection portions 72B provided so as to extend out upright from the top side and the bottom side of the horizontal plate section 72A. The direction of water vapor flow is not limited to a single direction due to the projection portions 72B being arrayed at separated intervals on the horizontal plate section 72A in two dimensions. The degrees of freedom of movement of the water vapor are thereby increased, and for example water vapor can be suppressed from remaining only in a central portion of the main tube section 72.

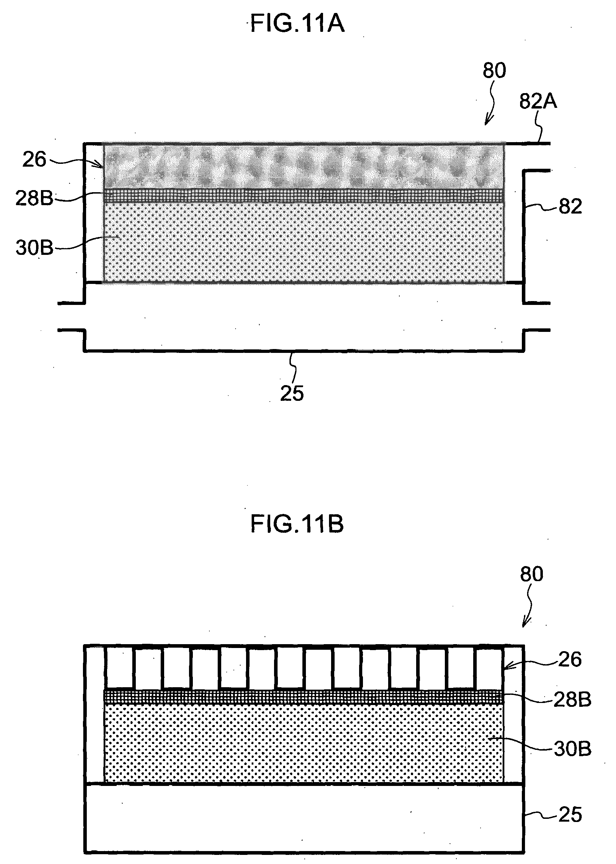

Fig. 11A and Fig. 11B illustrate sections on the X-Y plane and the Y-Z plane of a reaction vessel 80 (an example of chemical heat storage reactor) serving as a Test Example 5. The reaction vessel 80 is provided with a reaction vessel 82 in place of the reaction vessel 22 (see Fig. 1) of the reactor 20 of Test Example 1, with the reaction vessel 82 being close to half the size of the reaction vessel 22. An inflow opening 82A for water vapor is formed to the reaction vessel 82 and the reaction vessel 82 is configured with a heat storage material 30B, a branch tube section 28B and a main tube section 26 stacked inside in the reaction vessel 82 in this sequence from the bottom side towards the top side. Namely the reaction vessel 80 is configured by providing the heat storage material 30B on only one side of the main tube section 26.

In the reaction vessel 80, the usable water vapor when the main tube section 26 is employed is 1/2 that of the reactor 20 of the Test Example 1, and there is a reduction in water vapor supply efficiency. However the housing space for the chemical heat storage system 10 can be reduced due to the external profile of the reaction vessel 80 being smaller than that of the reactor 20.

The present invention is not limited by the above test examples.

The direction of water vapor flow in the reaction vessel 22 (arrow X direction) and the direction of heating medium flow in the heating medium flow paths 24, 25 may be disposed so as to be orthogonal to each other when viewed from the side. Configuration may be made such that in place of the heater 18, the heating medium flow path through which the heating medium flows is disposed in the liquid phase section 16B so as to generate water vapor. Configuration may be made in which the heater or the heating medium flow path is disposed adjacent to the heat storage materials 30A, 30B, such that heat storage materials 30A, 30B are heated and the dehydration reaction is caused to occur.

Whereas calcium oxide is employed as the heat storage materials 30A, 30B, calcium hydroxide may be employed, or any other chemical heat storage material that performs heat dissipation and heat storage by hydration and dehydration. Whereas in the above test examples examples are illustrated in which molded bodies are employed for the heat storage materials 30A, 30B, there is no limitation thereto and, for example, the reactor 20 may be configured by filling heat storage material of a granular form inside the reaction vessel 22.

## Claims

1. A chemical heat storage reactor (20) comprising:
at least one medium flow path (24, 25) through which a heat carrier flows;
a vessel (22; 40) provided adjacent to the at least one medium flow path (24, 25) and into which water vapor flows;
at least one heat storage material (30A, 30B) provided at the medium flow path (24, 25) side inside the vessel (22; 40), generating heat by a hydration reaction with water vapor, and storing heat by a dehydration reaction when heated;
at least one branch tube section (28A, 28B) provided inside the vessel (22; 40) on the side of one of the heat storage materials (30A, 30B) opposite to the medium flow path (24, 25) side, and permitting water vapor to pass through a flow path that is narrower than the average particle size of said one of the heat storage materials (30A, 30B); and
a corrugated plate forming a main tube section (26; 42) provided inside the vessel (22; 40) on a side of one of the branch tube sections (28A, 28B) opposite to the heat storage material (30A, 30B) side, allowing water vapor to flow,
wherein the corrugated plate comprises a plurality of wall sections provided along a direction of water vapor flow for suppressing or absorbing expansion of the at least one heat storage material (30A, 30B);
a cross-sectional area of the plurality of wall sections in an orthogonal direction that is orthogonal to the water vapor flow direction being set in the range from 5% to 20% of a cross-sectional area in the orthogonal direction of the water vapor flow path inside the main tube section (26; 42), and
the corrugated plate is formed with repeating recesses and projections in a cross-sectional profile along the orthogonal direction that is a square waveform profile or that is a waveform profile with rounded apex portions that make contact with the at least one branch tube section (28A, 28B).

2. The chemical heat storage reactor (20) of claim 1, wherein in a cross-section of the corrugated plate along the orthogonal direction, the length of a single pitch from a recess to a projection is set to be less than or equal to 7 times a cross-sectional thickness of the at least one heat storage material (30A, 30B) in the orthogonal direction.

3. The chemical heat storage reactor of claim 1 or 2, wherein the at least one branch tube section (28A, 28B) is configured with a mesh form structural body.

4. The chemical heat storage reactor (20) of any one of claim 1 to claim 3, wherein pairs of medium flow paths (24, 25), heat storage materials (30A, 30B) and the branch tube sections (28A, 28B) are provided such that the first member of each pair is provided at an upper side of the main tube section (26; 42), while the second member of each pair is provided at a lower side of the main tube section (26; 42).

5. A chemical heat storage system (10) comprising:
the chemical heat storage reactor (20) of any one of claim 1 to claim 4; and
an evaporation section (12) provided in a state of airtight communication with the vessel (22; 40), for evaporating water and supplying the evaporated water into the vessel (22; 40).

## Patentansprüche

1. Chemischer Wärmespeicherreaktor (20), umfassend:
mindestens einen Mediumströmungsweg (24, 25), durch den ein Wärmeträger strömt,
einen Behälter (22; 40), der angrenzend an den mindestens einen Mediumströmungsweg (24, 25) bereitgestellt ist und in den Wasserdampf strömt,
mindestens ein Wärmespeichermaterial (30A, 30B), das auf der Seite des Mediumströmungswegs (24, 25) innerhalb des Behälters (22; 40) bereitgestellt ist, durch eine Hydratisierungsreaktion mit Wasserdampf Wärme erzeugt und durch eine Dehydratisierungsreaktion beim Erwärmen Wärme speichert,
mindestens einen Verzweigungsrohrabschnitt (28A, 28B), der innerhalb des Behälters (22; 40) auf der Seite eines der Wärmespeichermaterialien (30A, 30B) gegenüber der Seite des Mediumströmungswegs (24, 25) bereitgestellt ist und ein Hindurchtreten von Wasserdampf durch einen Strömungsweg zulässt, der enger ist als die durchschnittliche Teilchengröße des einen der Wärmespeichermaterialien (30A, 30B) und
eine gewellte Platte, die einen Hauptrohrabschnitt (26; 42) bildet, der innerhalb des Behälters (22; 40) auf einer Seite von einem der Verzweigungsrohrabschnitte (28A, 28B) gegenüber der Seite des Wärmespeichermaterials (30A, 30B) bereitgestellt ist und das Strömen von Wasserdampf zulässt,
wobei die gewellte Platte eine Mehrzahl von Wandabschnitten umfasst, die entlang einer Richtung des Wasserdampfstroms zum Unterdrücken oder Absorbieren einer Ausdehnung des mindestens einen Wärmespeichermaterials (30A, 30B) bereitgestellt sind,
eine Querschnittsfläche der Mehrzahl von Wandabschnitten in einer orthogonalen Richtung, die orthogonal zu der Wasserdampfströmungsrichtung ist, im Bereich von 5 % bis 20 % einer Querschnittsfläche in der orthogonalen Richtung des Wasserdampfströmungswegs innerhalb des Hauptrohrabschnitts (26; 42) eingestellt ist, und
die gewellte Platte mit wiederholten Vertiefungen und Vorwölbungen in einem Querschnittsprofil entlang der orthogonalen Richtung ausgebildet ist, wobei es sich um ein quadratisches Wellenformprofil oder um ein Wellenformprofil mit gerundeten Scheitelpunktabschnitten handelt, die mit dem mindestens einen Verzweigungsrohrabschnitt (28A, 28B) in Kontakt sind.

2. Chemischer Wärmespeicherreaktor (20) nach Anspruch 1, bei dem in einem Querschnitt der gewellten Platte entlang der orthogonalen Richtung die Länge eines einzelnen Abstands von einer Vertiefung zu einer Vorwölbung auf weniger als oder gleich das 7-fache einer Querschnittsdicke des mindestens einen Wärmespeichermaterials (30A, 30B) in der orthogonalen Richtung eingestellt ist.

3. Chemischer Wärmespeicherreaktor nach Anspruch 1 oder 2, bei dem der mindestens eine Verzweigungsrohrabschnitt (28A, 28B) mit einem Strukturkörper in Netzform ausgebildet ist.

4. Chemischer Wärmespeicherreaktor (20) nach einem von Anspruch 1 bis Anspruch 3, bei dem das Paar von Mediumströmungswegen (24, 25), die Wärmespeichermaterialien (30A, 30B) und die Verzweigungsrohrabschnitte (28A, 28B) so bereitgestellt sind, dass das erste Element jedes Paars an einer Oberseite des Hauptrohrabschnitts (26; 42) bereitgestellt ist, während das zweite Element jedes Paars an einer Unterseite des Hauptrohrabschnitts (26; 42) bereitgestellt ist.

5. Chemisches Wärmespeichersystem (10), umfassend:
den chemischen Wärmespeicherreaktor (20) nach einem von Anspruch 1 bis Anspruch 4 und
einen Verdampfungsabschnitt (12), der in einem Zustand einer luftdichten Verbindung mit dem Behälter (22; 40) zum Verdampfen von Wasser und zum Zuführen des verdampften Wassers in den Behälter (22; 40) bereitgestellt ist.

## Revendications

1. Réacteur à accumulateur de chaleur chimique (20), comprenant:
au moins un chemin d'écoulement de fluide (24, 25) à travers lequel un fluide caloporteur s'écoule ;
une cuve (22 ; 40) prévue à proximité dudit au moins un chemin d'écoulement de fluide (24, 25) et dans lequel de la vapeur d'eau s'écoule ;
au moins un matériau accumulateur de chaleur (30A, 30B) prévu du côté du chemin d'écoulement de fluide (24, 25) à l'intérieur de la cuve (22 ; 40), qui génère de la chaleur par une réaction d'hydratation avec de la vapeur d'eau, et qui accumule de la chaleur par une réaction de déshydratation lorsqu'il est chauffé ;
au moins une section de tube de ramification (28A, 28B) prévue à l'intérieur de la cuve (22 ; 40) sur le côté de l'un des matériaux accumulateurs de chaleur (30A, 30B) à l'opposé du côté du chemin d'écoulement de fluide (24, 25), et permettant à la vapeur d'eau de passer à travers un chemin d'écoulement qui est plus étroit que la taille de particule moyenne dudit au moins un des matériaux accumulateurs de chaleur (30A, 30B) ; et
une plaque ondulée formant une section de tube principal (26 ; 42) prévue à l'intérieur de la cuve (22 ; 40) sur un côté de l'une des sections de tube de ramification (28A, 28B) opposé au côté du matériau d'accumulation de chaleur (30A, 30B), permettant à la vapeur d'eau de s'écouler,
dans lequel la plaque ondulée comprend une pluralité de sections de paroi prévues le long d'une direction d'écoulement de vapeur d'eau afin de supprimer ou d'absorber la dilatation dudit au moins un matériau accumulateur de chaleur (30A, 30B) ;
une aire de section transversale de la pluralité de sections de paroi dans une direction orthogonale qui est orthogonale à la direction d'écoulement de vapeur d'eau se situe dans la gamme de 5 % à 20 % d'une aire de section transversale dans la direction orthogonale du chemin d'écoulement de vapeur d'eau à l'intérieur de la section de tube principal (26 ; 42), et
la plaque ondulée est formée avec des évidements et des saillies répétés dans un profil de section transversale le long de la direction orthogonale qui est un profil de forme d'onde carrée ou qui est un profil de forme d'onde présentant des parties de sommet arrondies qui entrent en contact avec ladite au moins une section de tube de ramification (28A, 28B).

2. Réacteur à accumulateur de chaleur chimique (20) selon la revendication 1, dans lequel dans une section transversale de la plaque ondulée le long de la direction orthogonale, la longueur d'un simple pas à partir d'un évidement jusqu'à une saillie est établie de manière à être inférieure ou égale à 7 fois une épaisseur de section transversale dudit au moins un matériau accumulateur de chaleur (30A, 30B) dans la direction orthogonale.

3. Réacteur à accumulateur de chaleur chimique selon la revendication 1 ou 2, dans lequel ladite au moins une section de tube de ramification (28A, 28B) est configurée avec un corps structurel en forme de maillage.

4. Réacteur à accumulateur de chaleur chimique (20) selon l'une quelconque de la revendication 1 à la revendication 3, dans lequel des paires de chemins d'écoulement de fluide (24, 25), de matériaux accumulateurs de chaleur (30A, 30B) et les sections de tube de ramification (28A, 28B) sont conçus de telle sorte que le premier élément de chaque paire soit prévu à un côté supérieur de la section de tube principal (26 ; 42), alors que le second élément de chaque paire est prévu à un côté inférieur de la section de tube principal (26 ; 42).

5. Système accumulateur de chaleur chimique (10), comprenant:
le réacteur à accumulateur de chaleur chimique (20) selon l'une quelconque de la revendication 1 à la revendication 4 ; et
une section d'évaporation (12) prévue dans un état de communication étanche à l'air avec la cuve (22 ; 40), afin de faire s'évaporer de l'eau et d'amener l'eau évaporée dans la cuve (22 ; 40).
